# EUROPEAN PATENT SPECIFICATION

(11) **EP 1 595 709 B1**
(45) Date of publication and mention of the grant of the patent: **30.12.2009**
(21) Application number: 05252625.8
(22) Date of filing: 27.04.2005
(51) Int. Cl.: B41J 13/10, B65H 5/26, B41J 11/38, B41J 13/00

(54) **Image recording apparatus**
Bilderaufzeichnungsvorrichtung
Dispositif d'impression d'images

(30) Priority: 11.05.2004 JP 2004141006
(43) Date of publication of application: 16.11.2005
(73) Proprietor: Ricoh Company, Ltd., Tokyo 143-8555 (JP)
(72) Inventor: Akihiro, Fujita, Isehara-shi Kanagawa (JP); Manabu, Nonaka, Chigasaki-shi Kanagawa (JP); Tetsu, Morino, Zama-shi Kanagawa (JP); Hideki, Sueoka, Machida-shi Tokyo (JP); Taku, Kudoh, Sagamihara-shi Kanagawa (JP); Yasuhiro, Kawashima, Atsugi-shi Kanagawa (JP); Shoji, Asanuma, Fujisawa-shi Kanagawa (JP); Masatoshi, Sakakitani, Atsugi-shi Kanagawa (JP); Kazumasa, Ishikawa, Kawasaki-shi Kanagawa (JP); Yasunobu, Youda, Sagamihara-shi Kanagawa (JP); Hajime, Nishida, Hiratsuka-shi Kanagawa (JP); Eiki, Yoshimizu, Atsugi-shi Kanagawa (JP); Shinichiro, Naruse, Fujisawa-shi Kanagawa (JP); Shigeyuki, Ito, Nagoya-shi Aichi (JP); Yohzoh, Dohki, Nagoya-shi Aichi (JP); Koji, Watanabe, Nagoya-shi Aichi (JP)
(74) Representative: Leeming, John Gerard

(56) References cited:
- EP-A- 0 876 923
- JP-A- 1 317 941
- JP-A- 3 272 923
- JP-A- 9 300 759
- JP-A- 57 072 543
- JP-A- 57 098 448
- JP-A- 58 028 396
- JP-A- 61 174 049
- US-A- 5 448 268
- US-A- 5 573 337
- US-A1- 2004 061 273

## Description

The present invention relates to an image recording apparatus such as a copying machine, a printer, a facsimile machine, or a multifunction imaging apparatus that is configured to record an image on a recording medium such as a sheet or an OHP film.

Conventionally, when conducting a printing operation at an inkjet printer, for example, a recording medium that is accommodated within a recording medium accommodating unit such as a paper feeding cassette is conveyed through a recording medium conveying path to be automatically fed to an image recording unit. The recording medium is conveyed through the image recording unit while a recording operation is conducted thereon, and the recording medium with an image recorded thereon is discharged out of the image recording unit.

It is noted that the inkjet printer may be configured to realize printing through manual paper feeding in addition to printing through automatic paper feeding as is described above. For example, a special recording medium such as a thick paper sheet, a glossy paper sheet, or an OHP film may be manually inserted into the printer, one sheet at a time, and the inserted sheet may pass through a straight manual paper feeding path to reach the recording medium conveying path, after which the recording medium is fed to the image recording unit.

However, in the inkjet printer with an automatic paper feeder and a manual paper feeder as is described above, manual paper feeding may possibly be conducted by mistake while an automatic paper feeding operation is conducted, in which case a recording medium supplied by the automatic paper feeding operation and a recording medium supplied by the manual paper feeding operation may enter the recording medium conveying path at the same time to cause a paper jam. In turn, an image recording apparatus has been proposed in the prior art that includes a shutter member arranged at a manual paper feeding opening, the shutter member being designed to be manually opened upon conducting a manual paper feeding operation.

However, in the image recording apparatus according to the prior art as is described above, the shutter member has to be manually opened upon conducting a manual paper feeding operation. Also, the recording medium has to be inserted through a.narrow manual paper feeding opening, and a guide member such as a manual paper feeding tray for guiding the recording medium is not provided. Thereby, the operability of manual paper feeding may be poor.

EP 0 876 923 A discloses a printer with a moveable paper guide mechanism for guiding paper from a roll of paper. The printer includes a guide plate that is driven in order to prevent collisions between the guide plate and a carriage carrying an ink jet head.

It is an object of the present invention to provide an image recording apparatus that is configured to prevent the occurrence of a paper jam upon mistakenly conducting manual paper feeding while an automatic paper feeding operation is being conducted without degrading the operability of manual paper feeding.

According to an aspect of the present invention, an image recording apparatus as defined in the appended claims is provided.

According to an embodiment of the present invention, when an automatic paper feeding operation is conducted, a recording medium such as a paper sheet that is accommodated within a recording medium accommodating unit such as a paper feeding cassette, a paper feeding tray, or a paper feeding apparatus is automatically fed to an image recording unit such as an inkjet engine unit via a recording medium conveying path. When a manual paper feeding operation is conducted, a recording medium such as a thick paper sheet, a glossy paper sheet, or an OHP film is manually inserted so that the recording medium is introduced into the recording medium conveying path via a manual paper feeding tray and fed to the image recording unit.

According to an embodiment of the present invention, when the manual paper feeding tray is switched from the retracted state to the used state while the automatic paper feeding operation is being conducted, an emergency halt operation for halting the automatic paper feeding operation is conducted.

According to an embodiment of the present invention, when the manual paper feeding tray is switched from the retracted state to the used state while the automatic paper feeding operation is being conducted, a warning message is generated signaling that the automatic paper feeding operation is currently being conducted.

According to an embodiment of the present invention, the automatic paper feeding operation is disabled after the manual paper feeding tray is switched from the retracted state to the used state.

According to an embodiment of the present invention, the image recording apparatus further includes a detection switch that is arranged to be turned on and off in accordance with the switching of the manual paper feeding tray between the retracted state and the used state.

The present invention will be described further below with reference to an everyday embodiment and the accompanying drawing, in which:
FIG.1 is a diagram showing an internal configuration of an inkjet image recording apparatus according to an embodiment of the present invention;
FIG.2 is a diagram showing a state in which an open/close guide member is set to a second position in the inkjet image recording apparatus of FIG.1;
FIG.3 is a diagram showing a state in which an open/close guide member is set to a first position in the inkjet image recording apparatus of FIG.1;
FIG.4 is a diagram showing a configuration of a shutter provided in the inkjet image recording apparatus of FIG.1; and
FIG.5 is a diagram showing a state in which a manual paper feeding tray is set to a used state in the inkjet image recording apparatus of FIG.1.

In the following, preferred embodiments of the present invention are described with reference to the accompanying drawings.

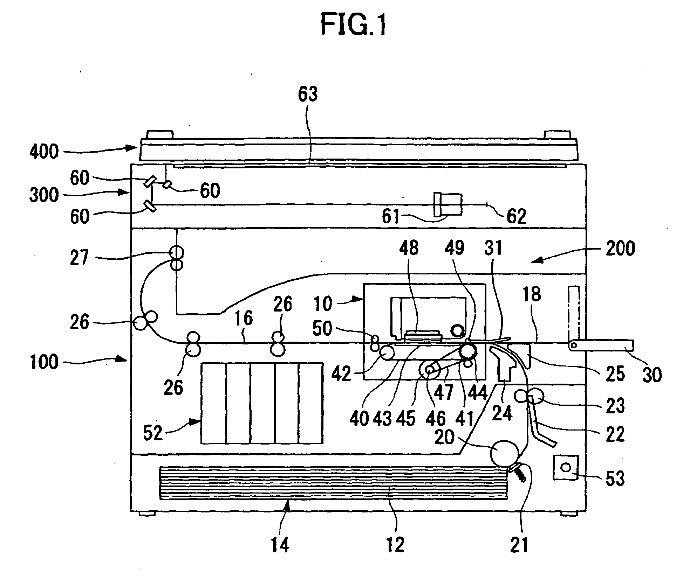

FIG.1 is a diagram showing an internal configuration of an inkjet image recording apparatus according to an embodiment of the present invention.

The inkjet image recording apparatus of FIG.1 includes an image recording apparatus main body 100 having a top face that is formed into a recessed portion, a delivery stack unit 200 that is provided at the recessed portion of the apparatus main body 100, a scanner unit 300 for reading a document image that is provided on top of the delivery stack unit 200, and a document holding board 400 that is provided on the scanner unit 300 and is configured to be freely opened and closed in up-down directions.

The image recording apparatus main body 100 includes an inkjet engine unit 10 as an image recording unit that is provided around a central portion of the apparatus main body 100, a recording medium accommodating unit 14 that is provided at a lower portion of the apparatus main body and is configured to stack recording media 12 such as paper sheets, and a recording medium conveying path 16 that extends slightly upward from one end of the recording medium accommodating unit 14 at one side of the apparatus main body 100, then curves inward to extend horizontally towards the other side of the apparatus main body 100 passing through the inkjet engine unit 10, then curves upward at the other side of the apparatus main body, and then makes a U-turn to reach the delivery stack unit 200.

Also, the apparatus main body 100 includes a manual paper feeding path 18 that extends horizontally from one side of the apparatus main body 100 and converges with the recording medium conveying path 16 before reaching the ink jet engine unit 10.

The recording medium conveying path 16 includes a paper feeding roller 20, a separating member 21 that is pushed toward the paper feeding roller 20, a medium guide 22, a pair of resist rollers 23, a guide member 24, and an open-close guide member 25, for example. Also, at a delivery path corresponding to a portion of the recording medium conveying path 16 extending after passing through the inkjet engine unit 10, plural pairs of conveying rollers 26 and a pair of delivery rollers 27 are provided.

The manual paper feeding path 18 includes a manual paper feeding tray 30 that is positioned at the entrance of the apparatus main body 100, and a manual paper feed conveying guide board 31 that is positioned at the point of convergence between the recording medium conveying path 16 and the manual paper feeding path 18.

The inkjet engine unit 10 includes an endless conveying belt 40 that is held between a drive roller 41 and a driven roller 42 in a manner such that one side of the endless belt 40 extends along the recording medium conveying path 16. The portion of the endless belt 40 extending along the recording medium conveying path 16 is supported by a backing board 43 backing the endless belt 40 from its underside. Also, the inkjet engine 10 includes a drive pulley 44 that is coaxial with the drive roller 41, a motor pulley 46 of a sub scanning motor 45, and a drive power transmitting belt 47 that is held between the drive pulley 44 and the motor pulley 46. The sub scanning motor 45 is rotated by the operation of its own DC motor, and drive power generated from the rotation is transmitted via the drive power transmitting belt 47 to the conveying belt 40 to induce rotation of the conveying belt 40 in a counterclockwise direction.

On the upper side of the recording medium conveying belt 16, an inkjet head 48 is provided facing against the conveying belt 40 with the recording medium conveying path 16 positioned in between the inkjet head 48 and the conveying belt 40. Also, the conveying belt 40 is held between the drive roller 41 and a holding roller 49 that is pushed toward the drive roller 41 from the upper side of the recording medium conveying belt 16 to form a nip with the conveying belt 40. Also, at a region close to the exit of the inkjet engine unit 10, the recording medium conveying belt 16 is held between a pair of discharge rollers 50.

As is shown in FIG.1, the apparatus main body 100 also includes an ink tank unit 52 provided at a lower side, the ink tank unit 52 including ink tanks of different color inks and being configured to supply ink to the inkjet head 48. Also, an HB stepping motor 53 is provided within a space created at a lower side of the medium guide 22, the HB stepping motor 53 being configured to rotate the resist roller 23.

The scanner unit 300 is formed into a flat box structure, and includes a light source (not shown) and plural mirrors 60, a lens unit 61, an optical-electrical conversion element 62 such as a CCD, and a contact glass 63 that is provided on the top surface of the box structure. A document that is placed on top of the contact glass 63 may be held in place by the document holding board 400 that holds down the document from the upper side of the contact glass 63. Then, the scanner unit 300 may be operated to drive a traveling unit (not shown) including the light source and mirrors, for example, so that light from the light source may be reflected at the document surface to be incident on the mirrors 60. The incident light is reflected by the plural mirrors 60, and an image is formed at the lens unit 61. Then, the image optical signal is converted into an electrical signal at the optical-electrical conversion element 62 and the document content is read.

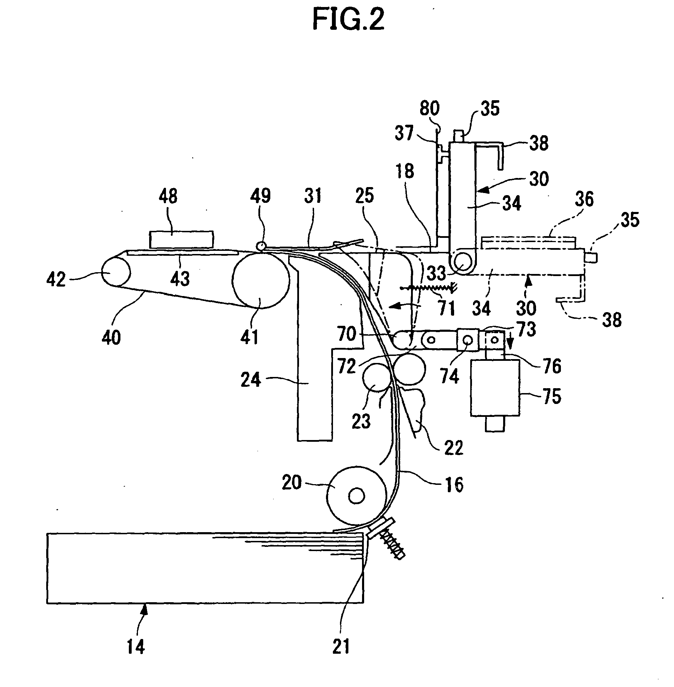

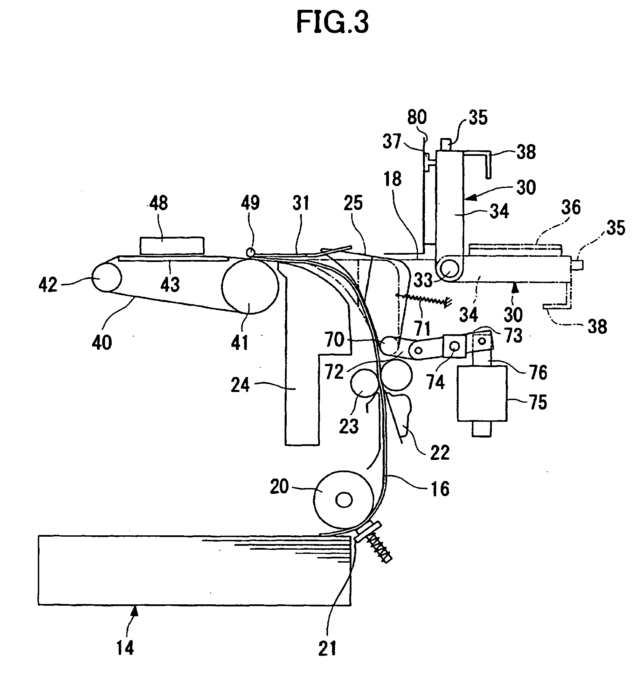

FIGS.2 and 3 are enlarged diagrams showing the regions around the paper feeding path of the inkjet image recording apparatus of FIG.1. FIG.2 illustrates a case in which the open/close guide member 25 is set to a second position, and FIG.3 illustrates a case in which the open/close guide member 25 is set to a first position. It is noted that the respective second and first positions of the open/close guide member 25 in FIGS.2 and 3 are represented by solid lines whereas the broken lines in FIGS.2 and 3 indicate positions of the open/close guide member 25 before being set to the represented positions.

As is shown in the drawings, the open/close guide member 25 is formed into a triangular shape, and may be freely rotated with respect to a lower end axis 70 between a first position that widens the recording medium conveying path 16 and a second position that narrows the recording medium conveying path 16. It is noted that normally, a spring force of a bias spring 71 is applied to the open/close guide member 25 so that the open/close guide member 25 hits against a stopper (not shown) to be set to the first position as is shown in FIG.3. When the open/close guide member 25 is set to the second position, a recording medium may be inserted into the manual paper feeding path 18.

It is noted that in the illustrated example, an arm member 72 is integrally connected to the open/close guide member 25 at its lower end axis 70 portion. The tip portion of the arm member 72 is connected to one end of a lever member 73 in a manner such that the lever member 73 may be freely rotated around an axis 74. The other end of the lever member 73 is connected to a plunger 76 of a solenoid 75. When the solenoid 75 is activated, the plunger 76 is pulled in, and the lever member 73 is rotated around the axis 74 in the direction of the arrow shown in FIG.2. In turn, the arm member 72 is raised, and the open/close guide member 25 is moved to the second position as is shown in FIG.2 against the spring force of the bias spring 71.

Also, it is noted that the manual paper feeding tray 30 includes a main body 34 that may be freely rotated with respect to an axis 33, an extending tray 35 that may be drawn in and out of the main body 34, side edge guides 36 for the recording medium that are provided on the upper surface of the main body 34, a detection switch 37 that is also provided on the upper surface of the main body 34, and a handle 38 that is provided at the lower surface end portion of the main body 34.

The manual paper feeding tray 30 may freely rotate around the axis 33 to move between a retracted state as is represented by solid lines in FIGS.2 and 3, and a used state as is represented by broken lines in FIGS.2 and 3. When the manual paper feeding tray 30 is set to the retracted state, the detection switch 37 hits against a box structure 80 of the apparatus main body 100 and is switched on.

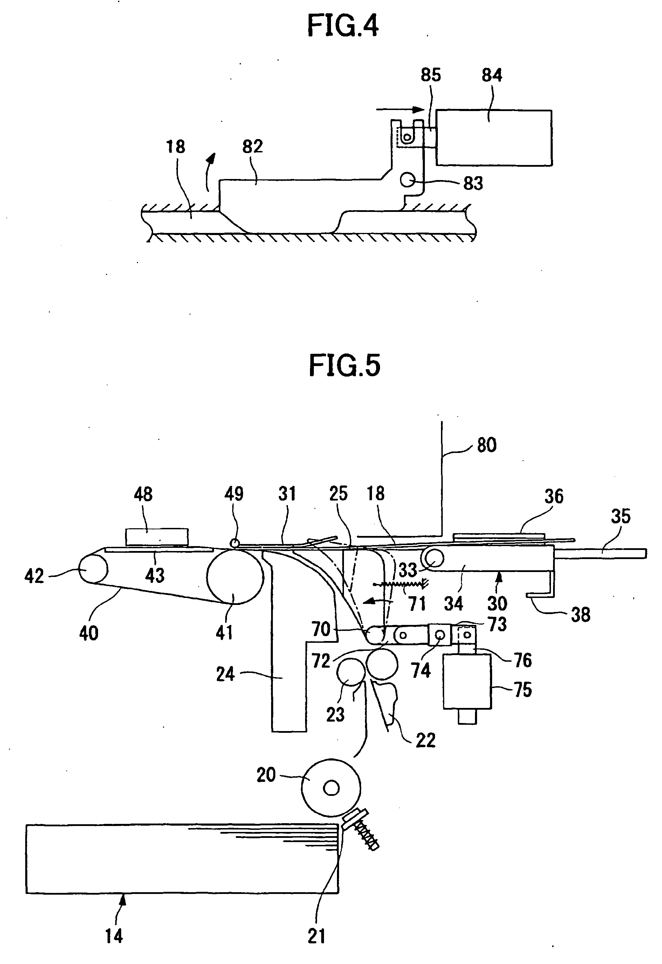

Referring to FIG.4, according to an embodiment, the manual paper feeding path 18 includes a shutter-82. The shutter 82 is arranged to rotate around an axis 83, and is engaged with a plunger 85 of a shutter solenoid 84. When the manual paper feeding tray 30 is set to the used state, the detection switch is switched from an on state to an off state indicating that a manual paper feeding operation is selected. In turn, the shutter solenoid 84 is turned on, and the plunger 85 is pulled in so that the shutter 82 may be rotated around the axis 83 in a direction indicated by the arrow in FIG.4 against the gravitational force to be set to an open position. In this state, a recording medium may be inserted into the recording medium conveying path 16 via the manual paper feeding path 18.

On the other hand, when the manual paper feeding tray is set to the retracted state, the detection switch 37 is switched from an off state to an on state indicating that an automatic paper feeding operation is selected. In turn, the shutter solenoid 84 is turned off, and the plunger is drawn out so that the shutter 82 rotates back to a closed position according to the gravitational force. In this state, the shutter 82 blocks a recording medium from being inserted into the recording medium conveying path 16 via the manual paper feeding path 18.

It is noted that when the power of the image recording apparatus main body 100 is switched off, the solenoid 75 is in a non-operation state and the spring power of the bias spring 71 does not work on the open/close guide member 25 so that the open/close guide member 25 is positioned in the first position as is shown in FIG.3. In this case, the shutter solenoid 84 is also in a non-operation state, and thereby, the shutter 82 is set to a closed position as is shown in FIG.4 according to the gravitational force. Also, the manual paper feeding tray 30 is preferably set to a retracted state for the sake of realizing compactness. When the power of the apparatus main body 100 is turned on from the state described above, the detection switch 37 is turned on, and thereby, the solenoid 75 is activated, and the open/close guide member 25 is set to the second position as is shown in FIG.2.

According to an embodiment, when conducting a copying operation, the document holding board 400 is opened to set a document on the contact glass 63, after which the document holding board 400 is closed to hold down the document. Then, a copying switch (not shown) is pushed to activate the scanner unit 300 so that the document surface may be scanned and the document content may be read.

According to the present embodiment, the paper feeding roller 20 rotates at an appropriate timing so that a recording medium 12 may be ejected out of the recording medium accommodating unit 14 from the top. Then, the recording medium 12 is separated by the separating member 21 to be inserted into the recording medium conveying path 16. The recording medium 12 is then guided by the medium guide 22 so that its edge portion may be inserted between the pair of resist rollers 23. Then, the resist rollers 23 are rotated at an appropriate timing so that the recording medium 12 may be inserted between the guide member 24 and the open/close guide member 25 and guided by the guide members to be set within the nip formed between the conveying belt 40 and the holding roller 49.

When the edge portion of the recording medium 12 is held at the nip, this state is detected by a detector (not shown), and the operation of the solenoid 75 is stopped. The bias spring 71 continues applying the spring force to the open/close guide member 25 so that the open/close guide member 25 is set to the first position as is shown in FIG.3. Then, the recording medium 12 is conveyed by the conveying belt 40 that is driven by the sub scanning motor 45 at a transfer rate that is lower than the transfer rate of the resist roller 23.

In other words, at the time when the edge portion of the recording medium 12 passes through the guide member 24 and the open/close guide member 25, the open/close guide member 25 is set to the second position. Thereby, the recording medium 12 may be conveyed with ease even when the recording medium is curled, for example. After the edge portion of the recording medium 12 passes through the guide member 24 and the open/close guide member 25, the open/close guide member 25 is set to the first position so that a loop is formed at the recording medium 12 from the difference in the transfer rates between the conveying belt 40 and the resist rollers 23. In this way, the conveying performance of the image recording apparatus may be improved, and recording media 12 of differing types may be effectively conveyed without inducing a paper jam.

The recording medium 12 that is guided to the nip formed between the conveying belt 40 and the holding roller 49 is conveyed by the conveying belt 40 to be inserted into the inkjet engine unit 10. The conveying belt continues to convey the recording medium 12 within the inkjet engine unit 10 while recording is conducted on the recording medium 12 by the inkjet head 48 according to the document content that is read by the scanner unit 300 as is described above. Then, the recording medium is discharged out of the inkjet engine unit 10 by the pair of discharge rollers 50. Then, the recording medium 12 is conveyed through the delivery path by plural pairs of delivery rollers, and is discharged onto the delivery stack unit 200 by the delivery rollers 27.

Then, the solenoid 75 is operated at an appropriate timing so that the lever member 73 may be rotated to raise the arm member 72. In this way, the open/close guide member 25 is set back to the second position as is shown in FIG.2. It is noted that by setting the open/close guide member 25 to the second position before the recording medium 12 passes through the open/close-guide member 25 and the guide member 24, a load from the recording medium 12 passing through the guide members may be prevented from working on the closing action of the open/close guide member 25, and the electromagnetic force of the solenoid 75 may be kept at a low level.

Then, the paper feeding roller 20 is rotated to eject the next recording medium 12 from the recording medium accommodating unit 14 and insert the recording medium 12 into the recording medium conveying path 16. The recording medium 12 is guided by the medium guide 22 and its edge portion is set between the pair of resist rollers 23. The resist rollers 23 are rotated at an appropriate timing to insert the recording medium 12 between the guide member 24 and the open/close guide member 25. The recording medium 12 is then guided by the guide members 24 and 25 to be set within the nip formed between the conveying belt 40 and the holding roller 49. In turn, the operation of the solenoid 75 is stopped and the open/close guide member 25 is set back to the first position as is shown in FIG.3.

Then, the recording medium 12 with its edge portion held between the nip is conveyed by the conveying belt 40 to be inserted into the inkjet engine unit 10 at which recording is conducted on the recording medium 12 by the inkjet head 48. The recording medium 12 is then discharged out of the inkjet engine unit 10 by the discharge rollers 50 to be conveyed through the delivery path by plural pairs of delivery rollers 26 and discharged onto the delivery stack unit 200 by the delivery rollers 27. It is noted that a similar copying process may be conducted for the next recording medium 12 as well.

According to an embodiment, in the case of conducting a copying operation on a recording medium that is manually fed to the image recording apparatus, the document holding board is opened and a document is placed on the contact glass 63 after which the document holding board 400 is closed as is described above. Then, the manual paper feeding tray 30 is rotated around the axis 33 by pulling the handle 38, for example, so that the manual paper feeding tray 30 may be set to a used state, and the detection switch 37 is moved away from the box structure 80 to be switched to an off state indicating that the manual paper feeding operation is selected. In turn, preparations are made for enabling the manual paper feeding operation as is described below.

First, the solenoid 75 is activated and the open/close guide member 25 is set to the second position (closed state). Then, the shutter solenoid 84 is turned on and the plunger 85 is pulled in so that the shutter 82 is set to an open position. Then, the extending tray 35 is drawn out of the main body 34 as is shown in FIG.5. Then, a recording medium may be inserted and guided along the manual paper feeding tray 30 by the side edge guides 36, and the edge portion of the recording medium may be passed through the manual paper feeding path 18 to be set into the nip formed between the conveying belt 40 and the holding roller 49.

Then, when a copying switch (not shown) is turned on, the document content is read by the scanner unit 300, and recording is conducted on the recording medium by the inkjet head according to the read document content while the recording medium is conveyed by the conveying belt 40. Then, the recording medium is conveyed through the delivery path by plural pairs of conveying rollers 26 and discharged onto the delivery stack unit 200 by the delivery rollers 27.

In an image recording apparatus as is described above that is configured to realize an automatic paper feeding operation in which a recording medium 12 accommodated in the recording medium accommodating unit 14 is automatically conveyed to the inkjet engine unit (image recording unit) 10 via the recording medium conveying path 16, and a manual paper feeding operation in which a recording medium 12 that is manually inserted into the image recording apparatus is introduced into the recording medium conveying path 16 via the manual paper feeding path 18 to then be conveyed the inkjet engine unit 10, when a manual paper feeding operation is conducted while an automatic paper feeding operation is conducted, or when an automatic paper feeding operation is being conducted while a manual paper feeding operation is being conducted, plural recording media 12 may be inserted into the recording medium conveying path 16 at once to thereby cause a paper jam.

In turn, according to an embodiment, when the manual paper feeding tray 30 is set to the retracted state, the automatic feeding operation is selected and the manual paper feeding tray 30 hinders a manually inserted recording medium from being introduced into the recording medium conveying path 16 via the manual paper feeding path 18. In this case, in order to conduct a manual paper feeding operation, the manual paper feeding tray 30 has to be switched to the used state. By adding such a switching procedure, a manual paper feeding operation may be prevented from being mistakenly conducted while an automatic paper feeding operation is conducted so that occurrence of a paper jam may be prevented. On the other hand, when the manual paper feeding tray 30 is set to the used state, the manual feeding operation is selected and the manual paper feeding tray 30 is arranged to allow a manually inserted recording medium to be introduced into the recording medium conveying path 16 via the manual paper feeding path 18. In this case a shutter member does not have to be manually opened, and the manually inserted recording medium may be guided by the manual paper feeding tray in the manual paper feeding operation, and thereby, the operability of manual paper feeding may be improved.

According to an embodiment, the shutter 82 that may be opened and closed is provided. When the manual paper feeding tray 30 is set to a retracted state so that the automatic paper feeding operation is selected, the shutter is arranged to be in a closed position so that the manual paper feeding path may be blocked by the shutter 82. In this way, a recording medium 12 may be prevented from being inserted into the recording medium conveying path 16 via the manual paper feeding path 18. Accordingly, a paper jam may be prevented from occurring as a result of mistakenly conducting a manual paper feeding operation while an automatic paper feeding operation is being conducted. Also, when the manual paper feeding operation is being conducted, the shutter is arranged to be set to an open position so that a recording medium 12 may be inserted into the recording medium conveying path 16 via the manual paper feeding path 18. Thereby, the shutter 82 does not have to be manually opened, and the recording medium that is manually fed to the image recording apparatus may be guided by the manual paper feeding tray 30 so that operability of manual paper feeding may be improved.

According to an embodiment, when the manual paper feeding tray 30 is set to a retracted state, an automatic feeding operation is selected and the shutter 82 is set to a closed position. When the manual paper feeding tray 30 is set to a used state, the manual paper feeding operation is selected and the shutter 82 is set to an open position. By realizing switching between an automatic paper feeding operation and a manual paper feeding operation in conjunction with the switching operation of the manual paper feeding tray 30, operability of manual paper feeding may be improved.

Also, according to an embodiment, when the manual paper feeding tray 30 is switched from a retracted state to a used state while an automatic paper feeding operation is being conducted, the automatic paper feeding operation is halted by an emergency halt operation. In this way, a paper jam caused by the overlapping of a recording medium 12 fed by an automatic paper feeding operation and a recording medium 12 fed by a manual paper feeding operation within the recording medium conveying path 16 may be prevented from occurring as a result of mistakenly conducting a manual paper feeding operation while an automatic paper feeding operation is being conducted.

According to an embodiment, when the manual paper feeding tray 30 is switched from a retracted state to a used state while an automatic paper feeding operation is being conducted, a warning message may be generated signaling that an automatic paper feeding operation is currently being conducted. In this way, the user receiving the warning message may be informed of the fact that a paper jam may possibly occur if a manual paper feeding operation is presently conducted. In turn, the user may wait until the automatic paper feeding operation is finished before starting a manual paper feeding operation in order to prevent trouble beforehand.

According to an embodiment, after the manual paper feeding tray 30 is switched from a retracted state to a used state, the automatic paper feeding operation is disabled. In this way, an automatic paper feeding operation may be prevented from being conducted while a manual paper feeding operation is being conducted so that a recording medium 12 fed through manual paper feeding and a recording medium 12 fed through automatic paper feeding may be prevented from being inserted into the recording medium conveying path 16 at the same time, and a paper jam may be prevented from occurring as a result of such an overlap of recording media 12 in the recording medium conveying path 16.

According to an embodiment, a detection switch 37 is provided that is turned on or off according to the switching of the manual paper feeding tray 30 between a retracted state and a used state. In this way, it may be easily determined whether the manual paper feeding tray 30 is in a retracted state or a used state by means of the detection switch 37, and distinction between an automatic paper feeding operation and a manual paper feeding operation may be swiftly and automatically determined to thereby conduct necessary control operations according to the currently selected paper feeding operation.

According to an embodiment, an open/close guide member 25 is provided that guides a recording medium 12 to the recording medium conveying path 16 when the automatic paper feeding operation is conducted, the open/close guide member 25 being arranged to be rotated between a first position that widens the recording medium conveying path 16 and a second position that narrows the recording medium conveying path 16. The open/close guide member 25 is set to the second position while the tip portion of the recording medium 12 is passing the open/close guide member 25, and thereby, the recording medium 12 may be easily conveyed even when the recording medium 12 is curled. Also, the open/close guide member 25 is set to the first position after the tip portion of the recording medium 12 passes through the open/close guide member 25 to thereby widen the recording medium conveying path 16 so that a loop may be created at the recording medium 12. In this way, conveying performance maybe improved, and various types of recording media 12 may be effectively conveyed without jamming.

According to an embodiment, when the automatic paper feeding operation is conducted, the open/close guide member 25 is set to the first position and hinders a manually inserted recording medium from being introduced into the recording medium conveying path via the manual paper feeding path. Thereby, a paper jam may be prevented from occurring as a result of mistakenly conducting a manual paper feeding operation while an automatic paper feeding operation is conducted. On the other hand, when the manual paper feeding operation is conducted, the open/close guide member 25 is set to the second position to allow a manually inserted recording medium 12 to be introduced into the recording medium conveying path 16 via the manual paper feeding path 18. In this way, the open/close guide member 25 is arranged to rotate in conjunction with the paper feeding operation being conducted so that the and the manually inserted recording medium may be guided by the manual paper feeding tray 30. Thereby, operability of manual paper feeding may be improved.

It is noted that according to the above described embodiments, the shutter 82 is provided separately from the manual paper feeding tray 30, and when conducting an automatic paper feeding operation, the shutter 82 is arranged to block the manual paper feeding path 18 to prevent a recording medium 12 from being inserted into the recording medium conveying path 16 via the manual paper feeding path 18. However, the present invention is not limited to such an arrangement, and for example, instead of providing the shutter 82, the manual paper feeding tray 30 may be arranged to block the manual paper feeding path 18 when it is set to a retracted state so that a recording medium 12 may be prevented from being inserted into the recording medium conveying path 16 via the manual paper feeding path 18.

According to another example, when the open/close guide member 25 is set to the first position, the open/close guide member 25 may be arranged to block the manual paper feeding path 18 to prevent a recording medium 12 from being inserted into the recording medium conveying path 16 via the manual paper feeding path 18. That is, a recording medium 12 fed through automatic paper feeding and a recording medium 12 fed through manual paper feeding may be prevented from being inserted into the recording medium conveying path 16 at the same time by setting the open/close guide member 25 to the first position.

Further, it is noted that the present invention is not limited to the specific embodiments described above, and variations and modifications may be made without departing from the scope of the following claims.

## Claims

1. An image recording apparatus that is configured to conduct an automatic paper feeding operation in which a recording medium accommodated in a recording medium accommodating unit (14) is automatically transferred to an image recording unit via a recording medium conveying path (16), and a manual paper feeding operation in which a manually inserted recording medium is introduced into the recording medium conveying path via a manual paper feeding path (18) to be transferred to the image recording unit, the image recording apparatus comprising :
an open/close guide member (25) configured to guide the recording medium to the recording medium conveying path when performing the automatic paper feeding operation, wherein said open/close guide member is rotatable between a first position that widens the recording medium conveying path (16) and a second position that narrows the recording medium conveying path; **characterized in that** :
the open/close guide member is located at the second position when a tip portion of the recording medium passes the open/close guide member, and is located at the first position after the tip portion of the recording medium has passed the open/close guide member; and **in that**
the open/close guide member blocks the manually inserted recording medium from being inserted into the recording medium conveying path via the manual paper feeding path when located at the first position.

2. An apparatus according to claim 1 further comprising:
a manual paper feeding tray (30) that is arranged to be switched between a retracted state and a used state; wherein
when the manual paper feeding tray is set to the retracted state, the automatic paper feeding operation is selected, and the manual paper feeding tray is arranged to hinder the manually inserted recording medium from being introduced into the recording medium conveying path (16) via the manual paper feeding path; and
when the manual paper feeding tray (30) is set to the used state, the manual paper feeding operation is selected, and the manual paper feeding tray is arranged to allow the manually inserted recording medium to be introduced into the recording medium conveying path via the manual paper feeding path.

3. An apparatus according to claim 1 or 2 further comprising:
a shutter (82) that is arranged to be set to an open position and a closed position; wherein
when the automatic paper feeding operation is conducted, the shutter is set to the closed position and is arranged to hinder the manually inserted recording medium from being introduced into the recording medium conveying path (16) via the manual paper feeding path (18) ; and
when the manual paper feeding operation is conducted, the shutter is set to the open position and is arranged to allow the manually inserted recording medium to be introduced into the recording medium conveying path via the manual paper feeding path.

4. An apparatus according to claim 3, further comprising:
a manual paper feeding tray (30) that is arranged to be switched between a retracted state and a used state; wherein
when the manual paper feeding tray is set to the retracted state, the automatic paper feeding operation is selected, and the shutter is set to the closed position; and
when the manual paper feeding tray is set to the used state, the manual paper feeding operation is selected, and the shutter is set to the open position.

5. An apparatus according to claim 2 or 4, wherein
when the manual paper feeding tray (30) is switched from the retracted state to the used state while the automatic paper feeding operation is being conducted, an emergency halt operation for halting the automatic paper feeding operation is conducted.

6. An apparatus according to claim 2 or 4, wherein
when the manual paper feeding tray is switched from the retracted state to the used state while the automatic paper feeding operation is being conducted, a warning message is generated signaling that the automatic paper feeding operation is currently being conducted.

7. An apparatus according to any one of claims 2 to 6, wherein:
the automatic paper feeding operation is disabled after the manual paper feeding tray (30) is switched from the retracted state to the used state.

8. An apparatus according to any one of claims 2 to 7 further comprising:
a detection switch (37) that is arranged to be turned on and off in accordance with the switching of the manual paper feeding tray between the retracted state and the used state.

## Patentansprüche

1. Bildaufzeichnungsvorrichtung, die konfiguriert ist, um eine automatische Papiervorschuboperation auszuführen, in der ein Aufzeichnungsmedium, das in einer Aufzeichnungsmedium-Aufnahmeeinheit (14) aufgenommen ist, automatisch über einen Aufzeichnungsmedium-Beförderungsweg (16) zu einer Bildaufzeichnungseinheit transportiert wird, und um eine manuelle Papiervorschuboperation auszuführen, in der ein manuell eingesetztes Aufzeichnungsmedium in den Aufzeichnungsmedium-Beförderungsweg über einen Weg (18) für manuellen Papiervorschub eingeführt wird, um zu der Bildaufzeichnungseinheit transportiert zu werden, wobei die Bildaufzeichnungsvorrichtung umfasst:
ein Öffnungs-/Schließ-Führungselement (25), das konfiguriert ist, um das Aufzeichnungsmedium zu dem Aufzeichnungsmedium-Beförderungsweg zu führen, wenn die automatische Papiervorschuboperation ausgeführt wird, wobei das Öffnungs-/Schließ-Führungselement zwischen einer ersten Position, die den Aufzeichnungsmedium-Beförderungsweg (16) verbreitert, und einer zweiten Position, die den Aufzeichnungsmedium-Beförderungsweg verschmälert, drehbar ist,
**dadurch gekennzeichnet, dass**:
das Öffnungs-/Schließ-Führungselement sich an der zweiten Position befindet, wenn sich ein vorderer Abschnitt des Aufzeichnungsmediums an dem Öffnungs-/Schließ-Führungselement vorbeibewegt, und sich an der ersten Position befindet, nachdem sich der vordere Abschnitt des Aufzeichnungsmedium an dem Öffnungs-/Schließ-Führungselement vorbeibewegt hat; und dass
das Öffnungs-/Schließ-Führungselement das Einsetzen des manuell eingesetzten Aufzeichnungsmediums in den Aufzeichnungsmedium-Beförderungsweg über den Weg für manuellen Papiervorschub blockiert, wenn es sich in der ersten Position befindet.

2. Vorrichtung nach Anspruch 1, die ferner umfasst:
ein Magazin (30) für manuellen Papiervorschub, das so beschaffen ist, dass es zwischen einem inaktiven Zustand und einem verwendeten Zustand umgeschaltet werden kann; wobei
dann, wenn das Magazin für manuellen Papiervorschub in den inaktiven Zustand versetzt ist, die automatische Papiervorschuboperation gewählt wird und das Magazin für manuellen Papiervorschub so beschaffen ist, dass es das Einführen des manuell eingesetzten Aufzeichnungsmediums in den Aufzeichnungsmedium-Beförderungsweg (16) über den Weg für manuellen Papiervorschub verhindert; und
dann, wenn das Magazin (30) für manuellen Papiervorschub in den verwendeten Zustand versetzt ist, die manuelle Papiervorschuboperation gewählt wird und das Magazin für manuellen Papiervorschub so beschaffen ist, dass es das Einführen des manuell eingesetzten Aufzeichnungsmediums in den Aufzeichnungsmedium-Beförderungsweg über den Weg für manuellen Papiervorschub zulässt.

3. Vorrichtung nach Anspruch 1 oder 2, die ferner umfasst:
einen Verschluss (82), der so beschaffen ist, dass er in eine geöffnete Position und in eine geschlossene Position versetzt werden kann; wobei
dann, wenn die automatische Papiervorschuboperation ausgeführt wird, der Verschluss in die geschlossene Position versetzt wird und so beschaffen ist, dass er das Einführen des manuell eingesetzten Aufzeichnungsmediums in den Aufzeichnungsmedium-Beförderungsweg (16) über den Weg (18) für manuellen Papiervorschub verhindert; und
dann, wenn die manuelle Papiervorschuboperation ausgeführt wird, der Verschluss in die geöffnete Position versetzt wird und so beschaffen ist, dass er das Einführen des manuell eingesetzten Aufzeichnungsmediums in den Aufzeichnungsmedium-Beförderungsweg über den Weg für manuellen Papiervorschub zulässt.

4. Vorrichtung nach Anspruch 3, die ferner umfasst:
ein Magazin (30) für manuellen Papiervorschub, das so beschaffen ist, dass es zwischen einem inaktiven Zustand und einem verwendeten Zustand umgeschaltet werden kann; wobei
dann, wenn das Magazin für manuellen Papiervorschub in den inaktiven Zustand versetzt ist, die automatische Papiervorschuboperation ausgewählt wird und der Verschluss in die geschlossene Position versetzt wird; und
dann, wenn das Magazin für manuellen Papiervorschub in den verwendeten Zustand versetzt wird, die manuelle Papiervorschuboperation ausgewählt wird und der Verschluss in die geöffnete Position versetzt wird.

5. Vorrichtung nach Anspruch 2 oder 4, wobei
dann, wenn das Magazin (30) für manuellen Papiervorschub von dem inaktiven Zustand in den verwendeten Zustand umgeschaltet wird, während die automatische Papiervorschuboperation ausgeführt wird, eine Nothaltoperation ausgeführt wird, um die Ausführung der automatischen Papiervorschuboperation anzuhalten.

6. Vorrichtung nach Anspruch 2 oder 4, wobei
dann, wenn das Magazin für manuellen Papiervorschub von dem inaktiven Zustand in den verwendeten Zustand umgeschaltet wird, während die automatische Papiervorschuboperation ausgeführt wird, eine Warnmeldung erzeugt wird, die meldet, dass momentan die automatische Papiervorschuboperation ausgeführt wird.

7. Vorrichtung nach einem der Ansprüche 2 bis 6, wobei
die automatische Papiervorschuboperation gesperrt wird, nachdem das Magazin (30) für manuellen Papiervorschub von dem inaktiven Zustand in den verwendeten Zustand umgeschaltet worden ist.

8. Vorrichtung nach einem der Ansprüche 2 bis 7, die ferner umfasst:
einen Detektionsschalter (37), der so beschaffen ist, dass er in Übereinstimmung mit dem Umschalten des Magazins für manuellen Papiervorschub zwischen dem inaktiven Zustand und dem verwendeten Zustand geschlossen und geöffnet wird.

## Revendications

1. Appareil d'enregistrement d'image qui est configuré pour effectuer une opération d'alimentation automatique en papier dans lequel un support d'enregistrement logé dans une unité de logement de support d'enregistrement (14) est automatiquement transféré à une unité d'enregistrement d'image par l'intermédiaire d'un trajet de transport de support d'enregistrement (16), et une opération d'alimentation manuelle en papier dans laquelle un support d'enregistrement inséré manuellement est introduit dans le trajet de transport de support d'enregistrement par l'intermédiaire d'un trajet d'alimentation manuelle en papier (18) pour être transféré à l'unité d'enregistrement d'image, l'appareil d'enregistrement d'image comportant
un élément de guidage d'ouverture/fermeture (25) configuré pour guider le support d'enregistrement vers le trajet de transport de support d'enregistrement lors de l'exécution de l'opération d'alimentation automatique en papier, dans lequel ledit élément de guidage d'ouverture/fermeture peut tourner entre une première position qui élargit le trajet de transport de support d'enregistrement (16) et une seconde position qui rétrécit le trajet de transport de support d'enregistrement ; **caractérisé en ce que** :
l'élément de guidage d'ouverture/fermeture est situé à la seconde position lorsqu'une partie terminale du support d'enregistrement passe l'élément de guidage d'ouverture/fermeture, et est situé à la première position après que la partie terminale de l'élément d'enregistrement a passé l'élément de guidage d'ouverture/fermeture ; et **en ce que**
l'élément de guidage ouverture/fermeture bloque le support d'enregistrement inséré manuellement pour ne pas être inséré dans le trajet de transport de support d'enregistrement par l'intermédiaire du trajet d'alimentation manuelle en papier lorsqu'il est situé dans la première position.

2. Appareil selon la revendication 1 comportant en outre :
un plateau d'alimentation manuelle en papier (30) qui est disposé pour être commuté entre un état rétracté et un état d'utilisation ; dans lequel
lorsque le plateau d'alimentation manuelle en papier est fixé dans l'état rétracté, l'opération d'alimentation automatique en papier est sélectionnée, et le plateau d'alimentation manuelle en papier est disposé pour empêcher le support d'enregistrement inséré manuellement d'être introduit dans le trajet de transport de support d'enregistrement (16) par l'intermédiaire du trajet d'alimentation manuelle en papier ; et
lorsque le plateau d'alimentation manuelle en papier (30) est fixé dans l'état d'utilisation, l'opération d'alimentation manuelle en papier est sélectionnée, et le plateau d'alimentation manuelle en papier est disposé pour permettre au support d'enregistrement manuellement inséré d'être introduit dans le trajet de transport de support d'enregistrement par l'intermédiaire du trajet d'alimentation manuelle en papier.

3. Appareil selon la revendication 1 ou 2 comportant en outre :
un obturateur (82) qui est disposé pour être fixé dans une position ouverte et une position fermée ; dans lequel
lorsque l'opération d'alimentation automatique en papier est effectuée, l'obturateur est fixé dans la position fermée et est disposé pour empêcher le support d'enregistrement inséré manuellement d'être introduit dans le trajet de transport de support d'enregistrement (16) par l'intermédiaire du trajet d'alimentation manuelle en papier (18) ; et
lorsque l'opération d'alimentation manuelle en papier est effectuée, l'obturateur est fixé dans la position ouverte et est disposé pour permettre au support d'enregistrement inséré manuellement d'être introduit dans le trajet de transport de support d'enregistrement par l'intermédiaire du trajet d'alimentation manuelle en papier.

4. Appareil selon la revendication 3, comportant en outre :
un plateau d'alimentation manuelle en papier (30) qui est disposé pour être commuté entre un état rétracté et un état d'utilisation ; dans lequel
lorsque le plateau d'alimentation manuelle en papier est fixé dans l'état rétracté, l'opération d'alimentation automatique en papier est sélectionnée, et l'obturateur est fixé dans la position fermée ; et
lorsque le plateau d'alimentation manuelle en papier est fixé dans l'état d'utilisation, l'opération d'alimentation manuelle en papier est sélectionnée, et l'obturateur est fixé dans la position ouverte.

5. Appareil selon la revendication 2 ou 4, dans lequel lorsque le plateau d'alimentation manuelle en papier (30) est commuté de l'état rétracté à l'état d'utilisation lorsque l'opération d'alimentation automatique en papier est effectuée, une opération d'arrêt d'urgence pour arrêter l'opération d'alimentation automatique en papier est effectuée.

6. Appareil selon la revendication 2 ou 4, dans lequel lorsque le plateau d'alimentation manuelle en papier est commuté de l'état rétracté à l'état d'utilisation lorsque l'opération d'alimentation automatique en papier est effectuée, un message d'avertissement est généré signalant que l'opération d'alimentation automatique en papier est en train d'être effectuée.

7. Appareil selon l'une quelconque des revendications 2 à 6, dans lequel :
l'opération d'alimentation automatique en papier est désactivée après que le plateau d'alimentation manuelle en papier (30) est commuté de l'état rétracté à l'état d'utilisation.

8. Appareil selon l'une quelconque des revendications 2 à 7, comportant en outre :
un commutateur de détection (37) qui est agencé pour être mis en marche et coupé selon la commutation du plateau d'alimentation manuelle en papier entre l'état rétracté et l'état d'utilisation.
